# EUROPÄISCHE PATENTSCHRIFT

(11) **EP 3 231 597 B1**
(45) Veröffentlichungstag und Bekanntmachung des Hinweises auf die Patenterteilung: **22.08.2018**
(21) Anmeldenummer: 16164887.8
(22) Anmeldetag: 12.04.2016
(51) Int. Cl.: B32B 13/00, B32B 13/04, B32B 13/12, B32B 19/00, B32B 19/04, B32B 21/00, B32B 21/02, B32B 21/04, B32B 21/08, B32B 21/14, B32B 27/00, B32B 27/06, B32B 27/08, B32B 27/18, B32B 27/28, B32B 27/30, B32B 27/36, B32B 27/38, B32B 27/40, B32B 27/42, B32B 29/00

(54) **HOLZWERKSTOFFPANEEL, INSBESONDERE FUSSBODENPANEEL, UND VERFAHREN ZU DEREN HERSTELLUNG**
WOODEN PANEL, PARTICULARLY FLOORING PANEL, AND PROCESS FOR THE PRODUCTION THEREOF.
PANNEAU EN BOIS, PARTICULIÈREMENT DU TYPE PLANCHÉIAGE, ET UN PROCÉDÉ POUR SA PRODUCTION.

(43) Veröffentlichungstag der Anmeldung: 18.10.2017
(73) Patentinhaber: Flooring Technologies Ltd., Kalkara SCM1001 (MT)
(72) Erfinder: BRAUN, Roger, 6130 Willisau (CH); MOISCH, Dorin, 6014 Littau (CH); STEINMANN, Pius, 6122 Menznau (CH)
(74) Vertreter: Maikowski & Ninnemann Patentanwälte Partnerschaft mbB

(56) Entgegenhaltungen:
- EP-A1- 2 272 668
- EP-A1- 2 873 523
- US-A1- 2013 331 484

## Beschreibung

Die vorliegende Erfindung betrifft ein Holzwerkstoffpaneel, insbesondere ein Fußbodenpaneel nach dem Oberbegriff des Anspruchs 1, und ein Verfahren zur Herstellung des Holzwerkstoffpaneels nach Anspruch 13.

### Beschreibung

Die Verwendung von Holzwerkstoffplatten, z.B. in Form von Holzfaserplatten in unterschiedlichen Ausgestaltungen zur Verwendung als Fußbodenlaminat ist seit langem bekannt. Derartige Holzwerkstoffplatten weisen üblicherweise eine Oberfläche aus einem ausgehärteten Kunstharz auf. Insbesondere sind melaminbeschichtete Oberflächen im industriellen Fußboden- und Möbelbereich eine der am häufigsten auftretenden Oberflächen.

In einer speziellen Ausführungsform werden Holzwerkstoffplatten als Fußbodenpaneele verwendet, die eine geringe Aufbauhöhe aufweisen. Derartige Fußbodenpaneele werden auch als "Designfußboden" bezeichnet, die bedingt durch ihre geringe Aufbauhöhe vorteilhaft bei Renovierungsarbeiten eingesetzt werden können, ohne dass z.B. Türen abgeschliffen werden müssen. Typische Vertreter derartiger Fußböden sind u.a. Vinylfußböden oder aber auch PVC-freie Produkte, wie z.B. das Produkt "Silent Touch" der Fa. Meister.

Ein Problem bei der Verwendung von laminierten Fußbodenpaneelen besteht in der Schallbelastung, die von einem Benutzer oft als störend empfunden wird. Die Schallwellen werden in Folge einer Anregung des Fußbodens, beispielsweise durch Begehen erzeugt. Die Schallwellen sind zum einen als Begehschall in dem Raum hörbar in dem sich der angeregte Fußboden befindet (Raum- oder Begehschall), oder als Trittschall in angrenzenden, beispielsweise darunter liegenden Räumen hörbar.

Ein weiteres Problem ist die oft als unangenehm kühl empfundene Haptik von mit Melaminharzen beschichteten Fußbodenlaminaten bzw. Fußbodenpaneelen, die sich oft hart und kalt anfühlt. Insbesondere bei einer Nachahmung einer natürlichen Holzoberfläche fehlt die passende "Holzhaptik", die angenehm warm und sich nicht zu hart anfühlt.

Ein Ansatz zur Verbesserung bzw. Anpassung der Haptik besteht in der Einbindung von Füllstoffen wie z.B. Zellulosefasern oder Hohlkugeln in die melaminharzhaltigen Oberflächen.

Weitere bekannte Lösungen sind melaminfreie Polymerbeschichtungen. Diese weisen allerdings weniger gute Gebrauchs- und Verarbeitungseigenschaften auf und sind teurer und weniger etabliert.

Ein weiterer Ansatz zur Verbesserung der haptischen und akustischen Eigenschaften besteht in einer "Elastifizierung" einer Schicht im Laminataufbau. Hierunter ist die Behandlung einer oder mehrerer Schichten eines Laminataufbaus mit einer elastomerischen Beschichtung oder einem elastomerischen Materials zu verstehen. So wird in der WO 2010/088769 A1 ein Laminat auf der Basis einer Holzwerkstoffplatte als Trägerplatte und darauf angeordneten Papierlagen beschrieben, wobei eine oder mehrere der Papierlagen mit einer elastomerischen Polymerlösung vor-imprägniert ist. Als mögliche Elastomere werden Polyurethane, Polyolefine, Gummi-basierendes Material und andere verwendet.

Es sind auch Produkte z.B. der Firm Egger bekannt, in welchem ein thermoplastisches Polyurethan auf eine Trägerplatte aufgebracht wird und so für eine Elastifizierung der Oberfläche gesorgt wird, wobei neben den akustischen Eigenschaften auch die Wasserbeständigkeit positiv beeinflusst werden.

EP 2 873 523 A1 beschreibt eine Holzwerkstoffplatte bestehend aus einer Trägerplatte mit einer auf der Oberseite der Trägerplatte vorgesehenen Harzschicht, und einer auf der Harzschicht angeordneten Primerschicht mit einer Silanverbindung. Die Platte kann auch ein Dekorpapier enthalten. Die bisher bekannten Lösungen zur Verbesserung der akustischen und haptischen Oberflächeneigenschaften sind bisher allerdings unbefriedigend und unzureichend. Entsprechend besteht daher nach wie vor ein Bedarf an geeigneten Lösungen zur Anpassung der Haptik und weiterer Oberflächeneigenschaften an die entsprechenden naturnahen Dekore.

Der vorliegenden Erfindung liegt daher die technische Aufgabe zugrunde, ein Fußbodenpaneel mit verbesserten akustischen und haptischen Eigenschaften bereitzustellen. Zudem soll das Fußbodenpaneel eine gute Wasserbeständigkeit aufweisen, so dass Anwendungen im Feuchtbereich (Eingang, Küche, Bad) ebenfalls möglich werden.

Diese Aufgabe wird erfindungsgemäß durch ein Holzwerkstoffpaneel mit den Merkmalen des Anspruchs 1 und ein Verfahren zu dessen Herstellung gemäß Anspruch 13 gelöst. Entsprechend wird ein Holzwerkstoffpaneel, insbesondere ein Fußbodenpaneel, umfassend mindestens eine Trägerplatte und mindestens eine auf mindestens einer Seite der Trägerplatte angeordnete Papierlage bereitgestellt, wobei die mindestens eine Papierlage mit mindestens einer Zusammensetzung umfassend
- mindestens ein Formaldehydharz (oder Aminoplastharz),
- mindestens ein Polymer ausgewählt aus einer Gruppe enthaltend Polyacrylate, Polyepoxide, Polyester, Polyurethane und langkettige Silanole, und
- mindestens eine silanhaltige Verbindung der allgemeinen Formel (I)

   **RₐSiX₍₄₋ₐ₎** **(I),**
und/oder deren Hydrolyseprodukt umfasst, wobei
- X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl,
- R ein nicht-hydroliserbarer organischer Rest R ist ausgewählt aus der Gruppe umfassend Alkyl, Aryl, Alkenyl, substituiertes und nicht-substituiertes Alkinyl, Cycloalkyl, die durch -O- oder-NH- unterbrochen sein können, und
- wobei R mindestens eine funktionelle Gruppe Q aufweisen kann, die ausgewählt ist aus einer Gruppe enthaltend eine Hydroxy-, Ether-, Amino-, Monoalkylamino-, Dialkylamino-, Anilino-, Amid-, Carboxy-, Mercapto-, Alkoxy-, Aldehyd-Alkylcarbonyl-, Epoxid-, Alkenyl-, Alkinyl-, Acryl-, Acryloxy-, Methacryl-, Methacryloxy-, Cyano- und Isocyano-Gruppe, und
- a = 0, 1, 2, 3, insbesondere 0, 1 oder 2 ist.
imprägniert ist, wobei die mindestens eine Papierlage vollständig mit der Zusammensetzung aus Formaldehydharz, Polymer und silanhaltiger Verbindung durchtränkt ist. Im Sinne der vorliegenden Anmeldung ist es für einen Fachmann ersichtlich, dass die Hydrolyseprodukte der Silanverbindung der allgemeinen Formel (I) sich unter der allgemeinen Formel (II) O_{b}X_{c}(OH)_{d}RₑSiO(4-b-c-d-e)/2 mit b, c, d = 0 oder 1 und e = 1, 2, 3 zusammenfassen lassen können. Die Hydrolyse und/oder Kondensation der Verbindungen der allgemeinen Formel (I) wird durch die Reaktionsbedingungen, insbesondere durch saure Reaktionsbedingungen während der Harzherstellung bedingt und beeinflusst.

In einer bevorzugten Ausführungsform umfasst die mindestens eine Papierlage mindestens ein Dekorpapier. Es ist auch vorstellbar, dass mehr als eine Papierlage, d.h. mehr als ein Dekorpapier z.B. zwei, drei oder vier Papierlagen verwendet werden.

Dekorpapiere bzw. Dekorpapierlagen sind einlagige Spezialpapiere zur Oberflächenveredelung von Holzwerkstoffen, die eine hohe Dekorvielfalt ermöglichen. So sind neben den typischen Aufdrucken von diversen Holzstrukturen weitergehende Aufdrucke von geometrischen Formen oder künstlerischen Produkten erhältlich. Eine Einschränkung in der Motivwahl gibt es faktisch nicht. Um eine optimale Bedruckbarkeit zu gewährleisten muss das verwendete Papier eine gute Glätte und Dimensionsstabilität aufweisen und ebenfalls für eine Penetration einer notwendigen Kunstharzimprägnierung geeignet sein.

Durch die Imprägnierung der Papierlage mit der beschriebenen Zusammensetzung erfolgt eine Elastifizierung der Papierlage, z.B. eines Dekorpapiers. Derartige elastische Dekorpapiere können auch als Finishfolie im Sinne der vorliegenden Anmeldung bezeichnet werden. Vorliegend ist unter dem Begriff der "Imprägnierung" eine vollständige Durchtränkung der Papierlage mit der Zusammensetzung aus Formaldehydharz, Polymer und Silanverbindung zu verstehen. Derartige Imprägnierungen können z.B. in einem Imprägnierbad, oder auch durch Besprühen aufgebracht werden.

Die Zusammensetzung aus Formaldehyd-Harz, einem oder mehreren der angeführten Polymere und einer Silan-Verbindung der allgemeinen Formel (I) ermöglicht ein Vermischen von Formaldehyd-Harzen, wie z.B. Melamin-Formaldehyd-Harzen, mit Polymeren, wie z.B. Polyurethanen, ohne dass es zu Einbußen der Transparenz der Harzschicht auf der Papierlage kommt. Somit sind auch einfache Harzwechsel in der Produktion möglich. Zudem zeichnen sich die vorliegenden Holzwerkstoffpaneele durch einen erhöhten Reibungskoeffizienten und eine erhöhte Stoßfestigkeit, bevorzugt durch eine bis zu 3fach erhöhte Stoßfestigkeit gegenüber konventionellen Holzwerkstoffpaneelen aus. Auch ist die Haptik verbessert; die Oberfläche fühlt sich warm, samtartig, sogar hautähnlich bis gummiartig an.

In einer Ausführungsform des vorliegenden Holzwerkstoffpaneels ist die Trägerplatte eine Platte aus einem Holzwerkstoff, einem Holzwerkstoff-Kunststoff-Gemisch oder einem Verbundwerkstoff, insbesondere eine Span-, mitteldichte Faser(MDF)-, hochdichte Faser (HDF)-, Grobspan (OSB)- oder Sperrholzplatte und/oder eine WPC-Platte (wood plastic composite). Bevorzugt sind HDF-Trägerplatten, z.B. mit einer Dicke zwischen 3 und 5 mm, insbesondere 4 und 5 mm.

In einer weiteren Ausführungsform des vorliegenden Holzwerkstoffpaneels ist zwischen der mindestens einen imprägnierten Papierlage und der Trägerplatte mindestens eine Klebstoffschicht, insbesondere in Form eines Polyurethanklebers oder eines thermoplastischen Klebers, vorgesehen. Die imprägnierte Papierlage wird hierzu unter Verwendung des mindestens einen Klebers auf die Trägerplatte, z.B. in einer Kaschierpresse oder Kaschieranlage, aufkaschiert. Im Falle einer Kaschierung auf die Trägerplatte wird zunächst der geeignete Klebstoff, wie z.B. ein Polyvinylacetat (PVAc)- Leim, Harnstoffleim oder Polyurethan-Klebers (PU-Hotmelt), auf die Oberseite aufgetragen. Die notwendigen (flüssigen) Bindemittelmengen liegen zwischen 20 und 50 g/m², bevorzugt 30 und 40 g/m². Im Falle der Verwendung von PU-Hotmelt betragen die Auftragsmengen zwischen 50 und 150 g/m², bevorzugt zwischen 70 und 100 g/m². Der Vorschub der Kaschierlinie beträgt zwischen 10 und 50 m/min, bevorzugt 20 und 30 m/min.

In einer weiteren bevorzugten Ausführungsform des vorliegenden Holzwerkstoffpaneels ist auf der mindestens einen imprägnierten Papierlage mindestens eine Verschleißschutzschicht vorgesehen. Dabei kann die mindestens eine Verschleißschutzschicht in Form einer Overlaypapierlage, einer UV-härtbaren und/oder elektronenstrahlhärtbare (ESH)-Lackschicht oder einer wärmehärtbaren Harzschicht (Flüssigoverlay) vorgesehen sein.

Als Overlaypapierlagen werden dünne Papiere verwendet, welche typischerweise bereits mit einem Melaminharz getränkt wurden Es sind ebenfalls Overlays erhältlich, in denen bereits abriebfeste Partikel, wie zum Beispiel abriebfeste Partikel vorzugsweise ausgewählt aus der Gruppe enthaltend Aluminiumoxide, Borcarbide, Siliziumdioxide, Siliziumcarbide und Glaspartikel, in das Harz des Overlays eingemischt sind, um die Abriebfestigkeit des Laminats bzw. der Holzwerkstoffplatte zu erhöhen.

Im Falle einer UV-härtbaren und/oder Elektronenstrahl-härtbaren (ESH)-Lackschicht als Verschleißschutzschicht werden insbesondere strahlenhärtbare, acrylathaltige Lacke verwendet. Typischerweise enthalten die als Verschleißschicht verwendeten strahlenhärtbaren Lacke Methacrylate, wie z.B. Polyester(meth)acrylate, Polyether(meth)acrylate, Epoxy(meth)acrylate oder Urethan(meth)acrylate. Es ist auch denkbar, dass das verwendete Acrylat bzw. der acrylathaltige Lack substituierte oder unsubstituierte Monomere, Oligomere und/oder Polymere, insbesondere in Form von Acrylsäure, Acrylether und/oder Acrylsäureestermonomeren, Oligomeren oder Polymeren enthält.

In einer Ausführungsform sind bevorzugterweise mehr als eine strahlenhärtbare Lackschicht, bevorzugt zwei oder drei Lackschichten, vorgesehen, die jeweils aufeinander angeordnet oder aufgetragen werden. In solchen Fällen kann die Auftragsmenge für jede einzelne Lackschicht zwischen 10 g/m² und 50 g/m², bevorzugt 20 g/m² und 30 g/m² variieren oder gleich sein. Die Gesamtauftragsmenge kann in Abhängigkeit von der Anzahl der Lagen zwischen 30 g/m² und 150 g/m², bevorzugt 50 g/m² und 120 g/m² variieren.

Im Falle der Verwendung einer strahlenhärtbaren Lackschicht als Verschleißschutzschicht können neben den bereits oben angeführten abriebfesten Partikeln, wie zum Beispiel aus Korund oder Glas, natürlichen oder synthetische Fasern, auch weitere Additive, wie Flammschutzmittel und/oder luminiszierende Stoffe, zugegeben werden. Geeignete Flammschutzmittel können ausgewählt sein aus der Gruppe enthaltend Phosphate, Borate, insbesondere Ammoniumpolyphosphat, Tris(tri-bromneopentyl)phosphat, Zinkborat oder Borsäurekomplexe von mehrwertigen Alkoholen. Als lumineszierende Stoffe können fluoreszierende oder phosphoreszierende Stoffe, insbesondere Zinksulfit und Alkalialuminate zum Einsatz kommen.

Wie oben bereits erwähnt kann als Verschleißschutzschicht auch mindestens eine wärmehärtbare Harzschicht (Flüssigoverlay) verwendet werden. Dabei können ebenfalls mehrere wärmehärtbare Harzschichten verwendet werden, die übereinander angeordnet sind und entsprechend nacheinander aufgetragen werden.

Wie die strahlenhärtbare Schutzschicht kann auch die wärmehärtbare Harzschicht abriebfeste Partikel, natürliche und/oder synthetische Fasern und weitere Additive enthalten. Das wärmehärtbare Harz ist bevorzugt ein formaldehydhaltiges Harz, insbesondere ein Melamin-Formaldehyd-Harz und Melamin-Harnstoff-Formaldehyd-Harz. Als abriebfeste Partikel werden die bereits oben genannten Partikel, insbesondere Korund und Glaspartikel, verwendet. Darüber hinaus werden Härtungsmittel, Netz- und Trennmittel in einer derartigen Flüssigoverlayschicht bevorzugterweise eingesetzt.

Ein Verfahren zur Herstellung eines Flüssigoverlays aus wärmehärtbaren Harzschichten ist unter anderem in der EP 233 86 93 A1 beschrieben. In dem darin beschriebenen Beispiel erfolgt zunächst nach Reinigung der Oberfläche einer Holzwerkstoffplatte das Aufbringen einer ersten oberen, abriebfeste Partikel (z.B. Korundpartikel) enthaltenen Harzschicht auf eine Holzwerkstoffplatte als Trägerplatte, ein Trocknen dieser ersten Harzschicht, z.B. bis auf eine Restfeuchte von 3-6 %, anschließendes Aufbringen einer zweiten, Zellulosefasern enthaltenen Harzschicht auf die Holzwerkstoffplatte, wiederholtes Trocknen bzw. Antrocknen der zweiten Harzschicht, z.B. bis auf eine Restfeuchte von 3-6 %, Aufbringen einer mindestens dritten Glaspartikel enthaltenen Harzschicht auf die Holzwerkstoffplatte mit anschließendem Antrocknen der dritten Harzschicht, z.B. ebenfalls auf eine Restfeuchte von 3-6 % und ein finales Verpressen des Schichtaufbaus unter Druck- und Temperatureinfluss.

Entsprechend kann das Flüssigoverlay. in Form der hier beschriebenen wärmehärtbaren Harzschicht, mindestens zwei Lagen, bevorzugt mindestens drei nacheinander aufgetragene Lagen umfassen. Dabei ist die Auftragsmenge der Lagen gleich oder verschieden und kann jeweils zwischen 1 und 50 g/m², bevorzugt zwischen 2 und 30 g/m², insbesondere zwischen 5 und 15 g/m², betragen.

In einer Ausführungsform des vorliegenden Verfahrens umfasst die mindestens eine Verschleißschicht abriebfeste Partikel in einer Menge zwischen 5 bis 100 g/m², bevorzugt 10 und 70 g/m², insbesondere bevorzugt 20 und 50 g/m². Je höher die Menge an abriebfesten Partikel in der Verschleißschicht, desto höher ist auch deren Abriebfestigkeit.

In einer weiteren Ausführungsform kann auf der Seite der Trägerplatte, die der mit der imprägnierten Papierlage versehenen Seite gegenüberliegt (d.h. der Unterseite der Trägerplatte oder der der nach Einbau des Fußbodenpaneels dem Betrachter nicht sichtbare Seite), mindestens ein Gegenzug vorgesehen ist. Dadurch werden insbesondere die, durch die auf der Oberseite der Trägerplatte aufgebrachten Dekor- und Overlaylagen wirkenden Zugkräfte ausgeglichen. In einer bevorzugten Ausführungsform wird der Gegenzug als Zelluloselage ausgeführt, die ebenfalls imprägniert ist. Beispielsweise kann der Gegenzug als ein mit einem wärmehärtbaren Kunstharz imprägniertes Papier ausgeführt sein.

In einer besonders bevorzugten Ausführungsform weist das vorliegende Holzwerkstoffpaneel folgenden Schichtaufbau auf:
- Oberseite der Trägerplatte
   - Overlaypapier mit Melaminharzimprägnierung (bevorzugt Korundgefüllt),
   - elastisches Dekorpapier mit Imprägnierung aus Formaldehyd-Harz (Melamin-Formaldehyd-Harz), Polymer und Silanverbindung der allgemeinen Formel (I);
   - Polyurethan-Klebstoff;
- Trägerplatte, bevorzugt HDF-Trägerplatte;
- Unterseite der Trägerplatte
   - Gegenzug mit Melaminharzimprägnierung

Es ist ebenfalls möglich, in die Beschichtung der Oberseite, und hierbei insbesondere in das Overlay, 3D-Strukturen wie z.B. Vertiefungen oder Erhöhungen einzubringen. Derartige Strukturen können mit strukturierten Auftragswalzen erzeugt werden, die wenn nötig und/oder gewünscht den verwendeten Dekoren angepasst werden können. Derartige Methoden zur Strukturierung von Oberflächen sind z.B. aus der EP 2 251 501 B1 bekannt.

Gemäß einer weiteren Ausgestaltung kann es auch vorgesehen sein, dass das Holzwerkstoffpaneel zumindest in einem Randbereich des Paneels bzw. der Platte eine Profilierung aufweist, wobei das Profil beispielsweise die Einbringung eines Nut- und/oder Federprofils in eine Kante bzw. Seitenfläche der Holzwerkstoffplatte ermöglicht, wobei die so erhaltenen Paneele bzw. Holzwerkstoffplatten miteinander verbunden werden können und eine schwimmende Verlegung und Abdeckung eines Bodens ermöglichen.

Die für die Imprägnierung der mindestens einen Papierlage verwendete Zusammensetzung umfasst bzw. enthält mindestens zwei polymerisationsfähige bzw. polymere Komponenten, d.h. ein Formaldehyd-Harz (z.B. in Form eines Aminoplastharzes wie einem Melamin-Formaldehyd-Harzes), und ein weiteres reaktionsfähiges Polymer, sowie eine Silanverbindung. Die Zusammensetzung stellt demnach ein 3-Komponentensystem dar.

Das in der Imprägnierungszusammensetzung verwendete Formaldehydharz ist bevorzugt ein noch nicht vollständig ausgehärtetes Formaldehyd-Harz, z.B. in Form eines Aminoplastharzes und weist entsprechend noch freie OH-Gruppen und z.B. im Falle eines Melamin-Formaldehyd-Harzes neben den freien OH-Gruppen auch freie NH₂-Gruppen auf. Bevorzugt weist das zum Einsatz kommende Formaldehyd-Harz Prekondensate und Oligomere auf. Der Kondensationsgrad des verwendeten Formaldehydharzes, bevorzugt eines Melamin-Formaldehyd-Harzes, entspricht bevorzugt einer Wasserverträglichkeit bei 25°C von 1: 1.7-2.2 (Verhältnis Volumen Harz : Wasser).

Die in der Imprägnierungszusammensetzung verwendeten Polymere weisen bevorzugt eine reaktionsfähige Gruppe, wie Carboxylgruppe oder OH-Gruppe auf. Der Anteil an freien OH-Gruppen im Polymer kann zwischen 5 und 15 Gew%, bevorzugt zwischen 8 und 12 Gew% betragen. Im Falle der Verwendung von Polyurethan als Polymer liegt der Gehalt an freien OH-Gruppen z.B. bei 9,5 Gew%.

Die Polymere werden in Abhängigkeit von den für die Papierlage zu erreichenden gewünschten haptischen und akustischen Eigenschaften ausgewählt. Soll z.B. im Falle von naturnahen weichen Oberflächen wie Holzoberflächen eine warme Haptik erreicht werden, dann kommen bevorzugt langkettige Polymere zum Einsatz, die nicht oder nur in einem sehr geringen Umfang vernetzt sind (d.h. Polymer mit einem geringem Vernetzungsgrad). Im Falle von harten Oberflächen wie z.B. Stein- oder Fliesenmotiven mit einer eher kalten Haptik werden bevorzugt Polymere mit einem höheren Vernetzungsgrad (aber geringer als Melamin-Formaldehyd-Harz) verwendet. Es kann auch bevorzugt sein, Polymere einzusetzen, die keinen elastifizierenden Effekt habe, wie Epoxidharze oder Polyester.

Die in der vorliegenden Imprägnierungszusammensetzung verwendete Silanverbindung bzw. silanhaltige Verbindung der allgemeinen Formel (I) dient als Mittler zwischen dem Formaldehyd-Harz und dem Polymer. So ermöglichen die funktionellen Gruppen der Silanverbindung eine chemische Verbindung mit den jeweiligen reaktiven Gruppen des Formaldehyd-Harzes und des Polymers, wodurch eine gleichmäßige und homogene Mischung der verschiedenen Komponenten sichergestellt wird.

In einer weiteren Ausführungsform ist das in der mindestens einen Imprägnierungszusammensetzung verwendete Formaldehyd-Harz ein Melamin-Formaldehyd-Harz, ein Melamin-Harnstoff-Formaldehyd-Harz oder ein Harnstoff-Formaldehyd-Harz.

Es ist weiterhin vorgesehen, wenn in der mindestens einen Imprägnierungszusammensetzung Poly(metha)crylate als Polyacrylat, aliphatische Polyepoxide (Polyalkyldiepoxide) oder aromatische Polyepoxide wie Bisphenol-basierte Polyepoxide als Polyepoxide, aliphatische Polyurethane als Polyurethane verwendet werden. Als Silanole kommen langkettige Silanole mit einer Moleküllänge von mindestens 20 Monomereinheiten, bevorzugt von mindestens 50 Monomereinheiten zum Einsatz.

Das Polymer wird bevorzugt als wässrige Suspension verwendet, die in geeigneter Weise stabilisiert wird.

In einer weiteren Ausführungsform beträgt der Mengenanteil an Polymer in der vorliegenden Imprägnierungszusammensetzung mindestens 20 Gew%, bevorzugt mindestens 30 Gew%, insbesondere bevorzugt mindestens 50 Gew%. Entsprechend liegt das Masseverhältnis von Formaldehydharz und Polymer in einem Bereich zwischen 20 : 80, bevorzugt 30 : 70, insbesondere bevorzugt 50 : 50.

Der Mengenanteil an Silanverbindung in der Imprägnierungszusammensetzung beträgt mindesten 3 Gew%, bevorzugt 5 Gew%, weiterhin bevorzugt mindestens 10 Gew%. Insbesondere ist ein Mengenanteil zwischen 10 und 20 Gew% bevorzugt.

Der in der Silanverbindung der allgemeinen Formel (I) beschriebene Rest X ist vorteilhafterweise ausgewählt aus einer Gruppe enthaltend Fluor, Chlor, Brom, lod, C₁₋₆-Alkoxy, insbesondere Methoxy, Ethoxy, n-Propoxy und Butoxy, C₆₋₁₀-Aryloxy, insbesondere Phenoxy, C₂₋₇-Acyloxy, insbesondere Acetoxy oder Propionoxy, C₂₋₇-Alkylcarbonyl, insbesondere Acetyl, Monoalkylamino oder Dialkylamino mit C₁ bis C₁₂, insbesondere C₁ bis C₆. Besonders bevorzugte hydrolysierbare Gruppen sind C₁₋₄ Alkoxygruppen, insbesondere Methoxy und Ethoxy.

In einer bevorzugten Ausführungsform ist X ausgewählt aus einer Gruppe enthaltend OH, C₁₋₆-Alkoxy, insbesondere Methoxy, Ethoxy, n-Propoxy und Butoxy.

Der nicht- hydrolisierbare Rest R ist bevorzugt ausgewählt aus einer Gruppe umfassend C₁-C₃₀-Alkyl, insbesondere C₅-C₂₅-Alkyl, C₂-C₆-Alkenyl, C₂-C₆-Alkinyl und C₆-C₁₀-Aryl.

In einer Ausführungsform ist der nicht-hydrolisierbare Rest R ausgewählt aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, Phenyl und Naphthyl.

Unter dem Begriff "nicht-hydrolysierbarer organischer Rest" ist vorliegend ein organischer Rest zu verstehen, der in Gegenwart von Wasser nicht zur Bildung einer mit dem Si-Atom verknüpften OH-Gruppe oder NH₂-Gruppe führt.

Die mindestens eine funktionelle Gruppe Q, die im organischen nicht-hydrolisierbaren Rest R enthalten sein kann, umfasst vorteilhafterweise ein Epoxid-, insbesondere ein Glycidyl- oder Glycidyloxy-Gruppe, ein Amin- oder eine Isocyano-Gruppe.

Die Auswahl der geeigneten funktionellen Gruppe Q erfolgt bevorzugt in Abhängigkeit von dem verwendeten Polymer. So ist im Falle der Verwendung eines Polyacrylates als Polymer eine Silan-Verbindung mit einer Methacryl- oder Methacryloxy-Gruppe als funktionelle Gruppe Q von Vorteil. Bei Verwendung eines Polyepoxids als Polymer wird bevorzugt eine Silan-Verbindung mit einer Epoxy-Gruppe als funktionelle Gruppe zum Tragen kommen.

In einer besonders bevorzugten Ausführungsform werden als Silane Tetraethylorthosilan oder Methyltriethoxysilan oder auch Gamma-Isocyanatopropyltriethoxysilan oder ein Gycidyloxypropyltriethoxysilan verwendet.
In einer besonders bevorzugten Variante des vorliegenden Holzwerkstoffpaneels wird zur Imprägnierung der Papierlage eine Zusammensetzung umfassend ein Melamin-Formaldehyd-Harz, ein Polyurethan, eine oder mehrere Silan-Verbindungen und ggf. ein Härter verwendet.

Es ist weiterhin bevorzugt, wenn die Zusammensetzung 80-90 Gew% eines Melamin-Formaldehyd-Harzes (bevorzugtes Molverhältnis von Formaldehyd : Melamin ist 1 : 1,75), 10-20 Gew% einer Polymerdispersion (wie Polyurethan), 2-3 Gew% einer Silan-Verbindung und ggf. einen Rest an Härter aufweist.

Wie beschrieben, kann der nicht-hydrolisierbare Rest R über mindestens eine funktionelle Gruppe Q verfügen. Darüber hinaus kann der Rest R auch mit weiteren Resten substituiert vorliegen. Folgende Reste oder Substituenten können dabei vorliegen: Halogen, Hydroxy, geschütztes Hydroxy, Oxo, geschütztes Oxo, C₃-C₇-Cycloalkyl, bicyclisches Alkyl, Phenyl, Naphtyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Alkinyl", wie vorliegend verwendet, bezeichnet einen Rest der Formel R-C=C-, insbesondere ein "C₂-C₆-Alkinyl". Beispiele für C₂-C₆-Alkinyle schließen ein: Ethinyl, Propinyl, 2-Butinyl, 2-Pentinyl, 3-Pentinyl, 2-Hexinyl, 3-Hexinyl, 4-Hexinyl, Vinyl sowie Di- und Tri-ine von geraden und verzweigten Alkylketten.

Der Begriff "Aryl", wie vorliegend verwendet, bezeichnet aromatische Kohlenwasserstoffe, beispielsweise Phenyl, Benzyl, Naphthyl, oder Anthryl. Substituierte Arylgruppen sind Arylgruppen, die mit einem oder mehreren Substituenten, wie oben definiert, substituiert sein können.

Der Begriff "Cycloalkyl" umfasst die Gruppen Cyclopropyl, Cyclobutyl, Cyclopentyl, Cyclohexyl und Cycloheptyl.

In einer weiteren Ausführungsform ist vorgesehen, dass mehr als eine Imprägnierungszusammensetzung, bevorzugt zwei, drei oder vier Imprägnierungszusammensetzung verwendet werden.

In einer weitergehenden Ausführungsform des vorliegenden Holzwerkstoffpaneels ist vorgesehen, dass in der Imprägnierungszusammensetzung Nanopartikel mit einer Größe kleiner 500 nm verwendet werden. Die verwendeten Nanopartikel weisen eine Größe zwischen 2 und 400 nm, bevorzugt zwischen 2 bis 100 nm, insbesondere bevorzugt zwischen 2 bis 50 nm auf. Die Partikel können insbesondere von oxidischer, hydroxidischer oder oxihydroxidischer Natur sein, die über unterschiedliche Verfahren wie zum Beispiel Ionenaustauschprozess, Plasma-Prozess, Sol-Gel Verhahren, Vermahlung oder auch Flammabscheidung, hergestellt werden können. In einer bevorzugten Ausführungsform werden Partikel auf Basis von SiO₂, Al₂O₃, ZrO₂, TiO₂, SnO verwendet.

Es ist ebenfalls vorgesehen, dass die mindestens eine Imprägnierungszusammensetzung Füllstoffe, Netzmittel oder weitere Additive umfasst.

Als Füllstoffe können verschleißhemmende Materialien bzw. Partikel zugegeben werden. Diese können u. a. aus Aluminiumoxid (Korund), Carbiden z.B. Borcarbiden, Siliziumcarbiden, Siliziumdioxid und/oder Glaskugeln bestehen. Wichtig ist dabei, dass die Größe der Partikel auf die Auftragsmenge der Harzschicht abgestimmt ist. Die Größe der verschleißhemmenden Partikel kann im Bereich zwischen 1 und 20 µm, bevorzugt 5 und 15 µm, insbesondere bevorzugt zwischen 7 und 12 µm liegen.

Die mindestens eine Zusammensetzung zur Imprägnierung von mindestens einer Papierlage wird in einem Verfahren umfassend die folgenden Schritte hergestellt:
- Bereitstellen von mindestens einem Formaldehyd-Harz,
- Zugabe von mindestens einer Silanverbindung der allgemeinen Formel (I) zu dem mindestens einen Formaldehyd-Harz;
- Bereitstellen einer Suspension von mindestens einem Polymer ausgewählt aus einer Gruppe enthaltend Polyacrylate, Polyepoxide, Polyester, Polyurethane oder langkettige Silanole;
- Zugabe der Polymersuspension zu der Mischung aus Formaldehyd-Harz und Silanverbindung der allgemeinen Formel (I); und
- Zugabe von mindestens einem Katalysator, insbesondere einer hydrolytisch aktiven Verbindung, zu der Mischung.

Als hydrolytisch wirksame Verbindungen werden bevorzugt sauer oder basisch bzw. alkalisch reagierende Verbindungen eingesetzt.

Die sauer reagierenden Verbindungen können Substanzen ausgewählt aus der Gruppe enthaltend gesättigte oder ungesättigte Mono- und Polycarbonsäuren, insbesondere Octadecansäure, Acrylsäure, Methacrylsäure oder Crotonsäure, ss-Dicarbonylverbindungen, insbesondere Acetylaceton, oder Aminosäuren, organische Derivate der Schwefelsäure wie Alkylsulfate oder Fettalkoholsulfate, Ester der Sulfonsäuren wie Alkylsulfonsäuren und Alkylsulfonate, organische Phosphate wie (alkyl)ethoxylierte Phosphorsäuren oder Lecithin, Polysäuren, insbesondere Polyhydroxyasparaginsäure und Polyhydroxystearinsäure sein. Weitere Beispiele sind 1H,1H-Pentadecafluoroctanol, Octanol, Stearinsäure, Ölsäure, Hexansäurechlorid, Hexansäuremethylester, Hexylchlorid und Nonafluorbutylchlorid, verwendet werden.

Die alkalisch reagierenden Verbindungen sind bevorzugt ausgewählt aus der Gruppe enthaltend Mono- und Polyamine, insbesondere Methylamin, oder Ethylendiamin, Ammoniak, Alkali - und Erdalkalihydroxide, insbesondere NaOH.

Das vorliegende Holzwerkstoffpaneel wird in einem Verfahren umfassend die folgenden Schritte hergestellt:
- Bereitstellen von mindestens einer mit einer oben beschriebenen Zusammensetzung imprägnierten Papierlage;
- Bereitstellen von mindestens einer Trägerplatte;
- Auflegen (bzw. Aufkaschieren) der mindestens einen imprägnierten Papierlage auf mindestens eine Seite der mindestens einen Trägerplatte, und
- Verpressen der mindestens einen imprägnierten Papierlage und der mindestens einen Trägerplatte.

In einer Ausführungsform des vorliegenden Verfahrens wird die mindestens eine imprägnierte Papierlage unter Verwendung von mindestens einem Klebstoff, insbesondere einem Polyurethan-Klebstoff oder einem thermoplastischen Klebstoff, aufkaschiert. Dies passiert üblicherweise in einer Kaschieranlage.

In einer weitergehenden Ausführungsform werden (bevorzugt im Anschluss an das Aufkaschieren der imprägnierten Papierlage auf die Trägerplatte), die mindestens eine Trägerplatte mit der mindestens einen imprägnierten Papierlage, mindestens einem auf der imprägnierten Papierlage vorgesehenem Overlay und mindestens einem auf der gegenüberliegenden Seite der Trägerplatte vorgesehen Gegenzug in einer Kurztaktpresse verpresst.

In einer bevorzugten Ausführungsform werden die Dekorpapier- und/oder Overlaypapierlagen und der Gegenzug mit der Trägerplatte in einem Arbeitsschritt unter Wirkung von Temperatur und Druck in einer Kurztaktpresse zu einem Laminat verpresst.

Übliche Kurztakt-Pressen arbeiten beispielsweise bei einem Druck von 30 bis 60 kg/cm², einer Temperatur an der Holzwerkstoffoberfläche von etwa 165 - 175 °C und einer Presszeit von 6 bis 12 Sekunden.

Wie oben bereits beschrieben, ist es auch möglich, die Oberseiten der Holzwerkstoffpaneele mit einer Prägestruktur zu versehen. Dies erfolgt bevorzugt unmittelbar im Anschluss an das Aufbringen der imprägnierten Papierlage und ggf. des Overlays auf die Trägerplatte. So können während der Weiterverarbeitung der Holzwerkstoffpaneels in der Kurztakt-Presse unter Verwendung eines strukturierten Pressblechs Oberflächenstrukturen in mindestens einer Oberfläche, vorzugsweise der Oberseite der Holzwerkstoffpaneels erzeugt werden, die optional auf das Dekor abgestimmt ausgeführt sein können (so genannte dekorsynchrone Struktur). Vorzugsweise sind die Oberflächenstrukturen weitgehend deckungsgleich zum Dekor ausgebildet. In diesem Fall spricht man von Embossed-In-Register Strukturen. Bei Holzdekoren können die Strukturen in Form von Porenstrukturen vorliegen, die der Maserung folgen. Bei Fliesendekoren können die Strukturen Vertiefungen im Bereich von dem Dekor umfasster Fugenfüllungslinien sein.

Im Vergleich zur klassischen Laminatfußbodenherstellung ist zwar ein durch die Imprägnierung der Papierlage ein zusätzlicher Verfahrensschritt nötig, jedoch ist die Fertigung hochwertiger Strukturen mittels der Kurztaktpressen (KT) Technologie möglich.

Die Erfindung wird nachfolgend im Detail an einem Ausführungsbeispiel unter Bezugnahme auf die Figur näher erläutert. Es zeigt:

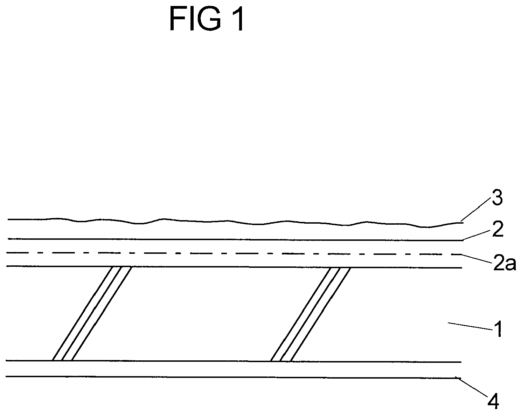

- Figur 1: eine schematische Darstellung des Schichtaufbaus einer Ausführungsform eines erfindungsgemäßen Holzwerkstoffpaneels.

In der Darstellung der Figur 1 ist der Schichtaufbau einer Ausführungsform des vorliegenden Holzwerkstoffpaneels gezeigt. Der Schichtaufbau ist von oben nach unten wie folgt:
Auf der Oberseite der Trägerplatte ist ein Overlaypapier 3 mit Melaminharzimprägnierung und Korundpartikeln vorgesehen, welches auf einem elastischen Dekorpapier 2 mit einer Imprägnierung aus Melamin-Formaldehyd-Harz, Polymer und einer Silanverbindung der allgemeinen Formel (I) angeordnet ist.

Das imprägnierte Dekorpapier 2 ist unter Verwendung eines Polyurethan-Klebers 2a auf einer HDF-Trägerplatte 1 (Dicke 4,5 mm) aufkaschiert. Auf der Unterseite der Trägerplatte 1 ist des Weiteren ein Gegenzug 4 mit Melaminharzimprägnierung vorgesehen.

**Ausführungsbeispiel 1:** Herstellen einer Zusammensetzung zur Imprägnierung einer Dekorpapierlage

Es werden 10.0 Gew% einer Polyurethan-haltigen Dispersion (PUR Dispersion Inobond DU-10), 87.5 Gew% eines Melaminharzes (Molverhältnis Formaldehyd: Melamin=1: 1.75), 0.25 Gew% eines Härters (Härter 529, BASF) und 3.0 Gew% einer Silan-Verbindung (Silane Inodur GW80N) vermischt und für mindesten 5 Minuten gut gerührt. Bei Bedarf sollte der pH Wert bei 7.5-8.5 korrigiert werden.

### Ausführungsbeispiel 2: Herstellen eines Holzwerkstoffpaneels

Ein Holzwerkstoffpaneel zur Verwendung als Designfussboden wird in dem folgenden Verfahren hergestellt:
- Herstellung einer HDF-Trägerplatte mit einer Dicke von 4,5 mm;
- Imprägnierung eines Dekorpapiers mit einer Zusammensetzung aus Ausführungsbeispiel 1 und Herstellung eines elastischem Dekorpapiers (Finishfolie);
- Aufkaschieren der Finishfolie auf den Träger mittels PUR Klebstoff in einer Kaschieranlage;
- Verpressen eines Overlays (Overlaypapierlage) auf die kaschierte Finishfolie in einer Kurztaktpresse und gleichzeitiges Verpressen eines Gegenzuges auf die Rückseite der Trägerplatte;
- Optionales vollflächiges Aufbringen eines Trittschalles auf die Rückseite der Trägerplatte;
- optionales Verarbeiten der grossformatigen Platte auf der Fussbodenlinie zu fertig verlegbaren Paneelen.

Der Schritt des Verpressens mit einem Overlay ist ein zusätzlicher Schritt, der die Herstellung besonders hochwertiger und optisch ansprechender Oberflächen ermöglicht. In der Kurztaktpresse können dabei optional Synchronporen eingebraucht werden, die für ein besonders naturnahes Ergebnis sorgen. Durch den Oberflächenaufbau sind weiterhin sehr tiefe Strukturen möglich. V-Fugen können direkt mit dem Pressblech in die Oberfläche eingebracht werden. Der vorliegende Aufbau ist auch für eine geringe Aufbauhöhe vorteilhaft, da im Vergleich zum Laminatfussboden erheblich weniger Spannungen in die Oberfläche eingebracht werden. Dies ermöglicht die Verwendung von dünnen Trägerplatten, z.B. Trägerplattenstärken von 4 mm.

Das vorliegende Holzwerkstoffpaneel, welches mit einer mit der Zusammensetzung aus Harz, Polymer und Silan imprägnierten Dekorpapierlage verpresst ist, weist eine gegenüber konventionellen Holzwerkstoffpaneelen bis um das 3-fach erhöhte Stoßfestigkeit auf. So zeigen konventionelle Melaminharzoberflächen keine Risse bei Federkräften zwischen 8 und 15 N mit dem Schlagprüfgerät Erichsen 305 auf. Im Falle der erfindungsgemäßen Holzwerkstoffpaneele kann hingegen eine Federkraft bis zu 35-40 N aufgewendet werden, ohne dass es zu einer Rissbildung kommt.

Darüber hinaus weist das vorliegende Holzwerkstoffpaneel eine matte, samtartige Oberfläche mit einer angenehmen Haptik (Soft Touch Effekt) und eine erhöhte Gehschallreduktion mit einer Absorption der höheren Tönen von bis zu 20% (Klangbild wie LVT-Luxury Vinyl Tiles).

## Patentansprüche

1. Holzwerkstoffpaneel, insbesondere Fußbodenpaneel, umfassend mindestens eine Trägerplatte und mindestens eine auf mindestens einer Seite der Trägerplatte angeordnete Papierlage,
**dadurch gekennzeichnet, dass**
die mindestens eine Papierlage mit mindestens einer Zusammensetzung umfassend
- mindestens ein Formaldehydharz,
- mindestens ein Polymer ausgewählt aus einer Gruppe enthaltend Polyacrylate, Polyepoxide, Polyester, Polyurethane und langkettige Silanole, und
- mindestens eine silanhaltige Verbindung der allgemeinen Formel (I)
**RₐSiX₍₄₋ₐ₎** **(I),**
und/oder deren Hydrolyseprodukt umfasst, wobei
- X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl,
- R ein nicht-hydroliserbarer organischer Rest R ist ausgewählt aus der Gruppe umfassend Alkyl, Aryl, Alkenyl, substituiertes und nicht-substituiertes Alkinyl, Cycloalkyl, die durch -O- oder -NH- unterbrochen sein können, und
- wobei R mindestens eine funktionelle Gruppe Q aufweisen kann, die ausgewählt ist aus einer Gruppe enthaltend eine Hydroxy-, Ether-, Amino-, Monoalkylamino-, Dialkylamino-, Anilino-, Amid-, Carboxy-, Mercapto-, Alkoxy-, Aldehyd-Alkylcarbonyl-, Epoxid-, Alkenyl-, Alkinyl-, Acryl-, Acryloxy-, Methacryl-, Methacryloxy-, Cyano- und Isocyano-Gruppe, und
- a = 0, 1, 2, 3, insbesondere 0, 1 oder 2 ist.
imprägniert ist, wobei die mindestens eine Papierlage vollständig mit der Zusammensetzung aus Formaldehydharz, Polymer und silanhaltiger Verbindung durchtränkt ist.

2. Holzwerkstoffpaneel nach Anspruch 1, **dadurch gekennzeichnet, dass** die mindestens eine Papierlage ein Dekorpapier umfasst.

3. Holzwerkstoffpaneel nach Anspruch 1 oder 2, **dadurch gekennzeichnet, dass** die Trägerplatte eine Platte aus einem Holzwerkstoff, aus Kunststoff, einem Holzwerkstoff-Kunststoff-Gemisch oder einem Verbundwerkstoff, insbesondere eine Span-, mitteldichte Faser(MDF)-, hochdichte Faser (HDF)-, Grobspan (OSB)- oder Sperrholzplatte, eine Zementfaserplatte, Gipsfaserplatte und/oder eine WPC-Platte (wood plastic composite) ist.

4. Holzwerkstoffpaneel nach einem der vorhergehenden Ansprüche, **dadurch gekennzeichnet, dass** zwischen der mindestens einen imprägnierten Papierlage und der Trägerplatte mindestens eine Klebstoffschicht, insbesondere in Form eines Polyurethanklebers oder eines thermoplastischen Klebers, vorgesehen ist.

5. Holzwerkstoffpaneel nach einem der vorhergehenden Ansprüche, **dadurch gekennzeichnet, dass** auf der mindestens einen imprägnierten Papierlage mindestens eine Verschleißschutzschicht vorgesehen ist.

6. Holzwerkstoffpaneel nach Anspruch 5, **dadurch gekennzeichnet, dass** die mindestens eine Verschleißschutzschicht in Form einer Overlaypapierlage, einer UV-härtbaren und/oder elektronenstrahlhärtbare (ESH)-Lackschicht oder einer wärmehärtbaren Harzschicht (Flüssigoverlay) vorgesehen ist.

7. Holzwerkstoffpaneel nach einem der vorhergehenden Ansprüche, **dadurch gekennzeichnet, dass** auf der der mit der imprägnierten Papierlage versehenen Seite gegenüberliegende Seite der Trägerplatte mindestens ein Gegenzug vorgesehen ist.

8. Holzwerkstoffpaneel nach einem der vorhergehenden Ansprüche, **dadurch gekennzeichnet, dass** das Formaldehyd-Harz ein Melamin-Formaldehyd-Harz, ein Melamin-Harnstoff-Formaldehyd-Harz oder ein Harnstoff-Formaldehyd-Harz ist.

9. Holzwerkstoffpaneel nach einem der vorhergehenden Ansprüche, **dadurch gekennzeichnet, dass** Poly(metha)crylate als Polyacrylate, aliphatische Polyepoxide (Polyalkyldiepoxide) oder aromatische Polyepoxide als Polyepoxide, aliphatische Polyurethane als Polyurethane verwendet werden.

10. Holzwerkstoffpaneel nach einem der vorhergehenden Ansprüche, **dadurch gekennzeichnet, dass** das Masseverhältnis von Formaldehydharz und Polymer in einem Bereich zwischen 20 : 80, bevorzugt 30 : 70, insbesondere bevorzugt 50 : 50 beträgt

11. Holzwerkstoffpaneel nach einem der vorhergehenden Ansprüche, **dadurch gekennzeichnet, dass** X ausgewählt ist aus einer Gruppe enthaltend OH, C₁₋₆-Alkoxy, insbesondere Methoxy, Ethoxy, n-Propoxy und Butoxy.

12. Holzwerkstoffpaneel nach einem der vorhergehenden Ansprüche, **dadurch gekennzeichnet, dass** auf der mindestens einen imprägnierten Papierlage und dem optional vorgesehenen Overlay-Strukturen insbesondere Synchronstrukturen, vorgesehen sind.

13. Verfahren zur Herstellung eines Holzwerkstoffpaneels nach einem der vorhergehenden Ansprüche umfassend die Schritte:
- Bereitstellen von mindestens einer mit einer Zusammensetzung gemäß einem der Ansprüche 1,8-11 imprägnierten Papierlage;
- Bereitstellen von mindestens einer Trägerplatte;
- Auflegen der mindestens einen imprägnierten Papierlage auf mindestens eine Seite der mindestens einen Trägerplatte, und
- Verpressen der mindestens einen imprägnierten Papierlage und der mindestens einen Trägerplatte.

14. Verfahren nach Anspruch 13, **dadurch gekennzeichnet, dass** die mindestens eine imprägnierte Papierlage unter Verwendung von mindestens einem Klebstoff, insbesondere einem Polyurethan-Klebstoff oder einem Thermoplast-Klebstoff, aufkaschiert wird.

15. Verfahren nach einem der Ansprüche 13 oder 14, **dadurch gekennzeichnet, dass** die mindestens eine Trägerplatte mit der mindestens einen imprägnierten Papierlage, mindestens einem auf der imprägnierten Papierlage vorgesehenem Overlay und mindestens einem auf der gegenüberliegenden Seite der Trägerplatte vorgesehen Gegenzug in einer Kurztaktpresse verpresst werden.

## Claims

1. Wood material panel, in particular floor panel, comprising at least one support plate and at least one paper layer arranged on at least one side of the support plate,
**characterized in that**
the at least one paper layer has been impregnated with at least one composition comprising
- at least one formaldehyde resin,
- at least one polymer selected from a group consisting of polyacrylates, polyepoxides, polyesters, polyurethanes and long-chain silanols, and
- at least one silane-containing compound of the general formula (I)
RₐSiX₍₄₋ₐ₎ (I),
and/or comprises a hydrolysis product thereof, where
- X is H, OH or a hydrolysable moiety selected from the group consisting of halogen, alkoxy, carboxy, amino, monoalkylamino or dialkylamino, aryloxy, acyloxy, alkylcarbonyl,
- R is a nonhydrolysable organic moiety R selected from the group consisting of alkyl, aryl, alkenyl, substituted and unsubstituted alkynyl, cycloalkyl, which can be interrupted by -O- or -NH-, and
- where R can have at least one functional group Q selected from a group consisting of a hydroxy, ether, amino, monoalkylamino, dialkylamino, aniline, amido, carboxy, mercapto, alkoxy, aldehyde, alkylcarbonyl, epoxide, alkenyl, alkynyl, acryl, acryloxy, methacryl, methacryloxy, cyano and isocyano group, and
- a = 0, 1, 2, 3, in particular 0, 1 or 2,
where the at least one paper layer is completely impregnated all through with the composition composed of formaldehyde resin, polymer and silane-containing compound.

2. Wood material panel according to Claim 1, **characterized in that** the at least one paper layer comprises a decor paper.

3. Wood material panel according to Claim 1 or 2, **characterized in that** the support plate is a plate composed of a wood material, of polymer, a wood material-polymer mixture or a composite material, in particular a chipboard, medium density fibreboard (MDF), high-density fibreboard (HDF), coarse chipboard (OSB) or plywood board, a fibrocement board, gypsum fibreboard and/or a WPC board (wood plastic composite).

4. Wood material panel according to any of the preceding claims, **characterized in that** at least one layer of adhesive, in particular in the form of a polyurethane adhesive or a thermoplastic adhesive, is provided between the at least one impregnated paper layer and the support plate.

5. Wood material panel according to any of the preceding claims, **characterized in that** at least one wear protection layer is provided on the at least one impregnated paper layer.

6. Wood material panel according to Claim 5, **characterized in that** the at least one wear protection layer is provided in the form of an overlay paper layer, a UV-curable and/or electron beam-curable (ESH) surface coating layer or a heat-curable resin layer (liquid overlay).

7. Wood material panel according to any of the preceding claims, **characterized in that** at least one backing layer is provided on the side of the support plate opposite the side provided with the impregnated paper layer.

8. Wood material panel according to any of the preceding claims, **characterized in that** the formaldehyde resin is a melamine-formaldehyde resin, a melamine-urea-formaldehyde resin or a urea-formaldehyde resin.

9. Wood material panel according to any of the preceding claims, **characterized in that** poly(meth)acrylates are used as polyacrylates, aliphatic polyepoxides (polyalkyl diepoxides) or aromatic polyepoxides are used as polyepoxides, aliphatic polyurethanes are used as polyurethanes.

10. Wood material panel according to any of the preceding claims, **characterized in that** the mass ratio of formaldehyde resin to polymer is in the range of 20:80, preferably 30:70, particularly preferably 50:50.

11. Wood material panel according to any of the preceding claims, **characterized in that** X is selected from a group consisting of OH, C₁₋₆-alkoxy, in particular methoxy, ethoxy, n-propoxy and butoxy.

12. Wood material panel according to any of the preceding claims, **characterized in that** overlay structures, in particular synchronized structures, are provided on the at least one impregnated paper layer and the optionally provided.

13. Process for producing a wood material panel according to any of the preceding claims, which comprises the steps:
- providing at least one paper layer impregnated with a composition according to any of Claims 1, 8-11;
- providing at least one support plate;
- laying the at least one impregnated paper layer on at least one side of the at least one support plate and
- pressing the at least one impregnated paper layer and the at least one support layer together.

14. Process according to Claim 13, **characterized in that** the at least one impregnated paper layer is laminated using at least one adhesive, in particular a polyurethane adhesive or a thermoplastic adhesive.

15. Process according to either of Claims 13 or 14, **characterized in that** the at least one support layer is pressed together with the at least one impregnated paper layer, at least one overlay provided on the impregnated paper layer and at least one backing layer provided on the opposite side of the support plate in a short cycle press.

## Revendications

1. Panneau en matériau dérivé du bois, en particulier panneau de plancher, comprenant au moins une plaque de support et au moins une strate de papier disposée sur au moins un côté de la plaque de support,
**caractérisé en ce que**
l'au moins une strate de papier est imprégnée d'au moins une composition comprenant
- au moins une résine de formaldéhyde,
- au moins un polymère choisi parmi un groupe contenant des polyacrylates, des polyépoxydes, des polyesters, des polyuréthanes et des silanols à longue chaîne, et
- au moins un composé contenant des silanes de la formule générale (I)
RₐSiX₍₄₋ₐ₎ (I)
et/ou son produit d'hydrolyse, dans laquelle
- X est H, OH ou un radical hydrolysable choisi parmi le groupe comprenant l'halogène, l'alcoxy, le carboxy, l'amino, le monoalkylamino ou le dialkylamino, l'aryloxy, l'acyloxy, l'alkylcarbonyle,
- R est un radical R organique non hydrolysable choisi parmi le groupe comprenant de l'alkyle, de l'aryle, de l'alcényle, un alcynyle substitué et non substitué, du cycloalkyle, qui peuvent être interrompus par -O- ou -NH-, et
- dans laquelle R peut présenter au moins un groupe fonctionnel Q, qui est choisi parmi un groupe contenant un groupe hydroxy, un groupe éther, un groupe amino, un groupe monoalkylamino, un groupe dialkylamino, un groupe anilino, un groupe amide, un groupe carboxy, un groupe mercapto, un groupe alcoxy, un groupe aldéhyde, un groupe alkylcarbonyle, un groupe époxyde, un groupe alcényle, un groupe alcynyle, un groupe acrylique, un groupe acryloxy, un groupe méthacrylique, un groupe méthacryloxy, un groupe cyano et un groupe isocyano, et
a = 0, 1, 2, 3, en particulier 0, 1 ou 2,
dans lequel l'au moins une strate de papier est totalement imbibée de la composition composée d'une résine de formaldéhyde, d'un polymère et d'un composé contenant des silanes.

2. Panneau en matériau dérivé du bois selon la revendication 1, **caractérisé en ce que** l'au moins une strate de papier comprend un papier décoratif.

3. Panneau en matériau dérivé du bois selon la revendication 1 ou 2, **caractérisé en ce que** la plaque de support est une plaque composée d'un matériau dérivé du bois, d'une matière plastique, d'un mélange de matériau dérivé du bois et de matière plastique ou d'un matériau composite, en particulier un panneau aggloméré, un panneau MDF (panneau de fibres à densité moyenne), un panneau HDF (panneau de fibres à densité élevée), un panneau OSB (panneau de particules orientées) ou un panneau de contreplaqué, un panneau en fibres de ciment, un panneau en fibres de plâtre et/ou un panneau WPC (panneau en composite bois plastique).

4. Panneau en matériau dérivé du bois selon l'une quelconque des revendications précédentes, **caractérisé en ce qu'**est prévue, entre l'au moins une strate de papier imprégnée et la plaque de support, au moins une couche de colle, en particulier sous la forme d'une colle de polyuréthane ou d'une colle thermoplastique.

5. Panneau en matériau dérivé du bois selon l'une quelconque des revendications précédentes, **caractérisé en ce qu'**au moins une couche de protection contre l'usure est prévue sur l'au moins une strate de papier imprégnée.

6. Panneau en matériau dérivé du bois selon la revendication 5, **caractérisé en ce que** l'au moins une couche de protection contre l'usure est prévue sous la forme d'une strate de papier overlay, d'une couche de vernis durcissable sous l'effet d'UV et/ou durcissable par un rayonnement d'électrons ou d'une couche de résine thermodurcissable (overlay liquide).

7. Panneau en matériau dérivé du bois selon l'une quelconque des revendications précédentes, **caractérisé en ce qu'**au moins une contretraction est prévue sur le côté, faisant face au côté pourvu de la strate de papier imprégnée, de la plaque de support.

8. Panneau en matériau dérivé du bois selon l'une quelconque des revendications précédentes, **caractérisé en ce que** la résine de formaldéhyde est une résine de mélamine-formaldéhyde, une résine de mélamine-urée-formaldéhyde ou une résine d'urée-formaldéhyde.

9. Panneau en matériau dérivé du bois selon l'une quelconque des revendications précédentes, **caractérisé en ce que** sont utilisés en tant que polyacrylates des poly(métha)crylates, en tant que polyépoxydes des polyépoxydes aliphatiques (polydiépoxydes d'alkyle) ou des polyépoxydes aromatiques, en tant que polyuréthanes des polyuréthanes aliphatiques.

10. Panneau en matériau dérivé du bois selon l'une quelconque des revendications précédentes, **caractérisé en ce que** le rapport massique entre la résine de formaldéhyde et le polymère se situe dans une plage entre 20:80, de manière préférée 30:70, en particulier de manière préférée 50:50.

11. Panneau en matériau dérivé du bois selon l'une quelconque des revendications précédentes, **caractérisé en ce que** X est choisi parmi un groupe contenant OH, un alkoxy en C₁-C₆, en particulier du méthoxy, de l'éthoxy, du n-propoxy et du butoxy.

12. Panneau en matériau dérivé du bois selon l'une quelconque des revendications précédentes, **caractérisé en ce que** sont prévues sur l'au moins une strate de papier imprégnée des structures overlay, en particulier des structures synchrones.

13. Procédé servant à fabriquer un panneau en matériau dérivé du bois selon l'une quelconque des revendications précédentes, comprenant les étapes :
- de fourniture d'au moins une strate de papier imprégnée d'une composition selon l'une quelconque des revendications 1, 8 - 11 ;
- de fourniture d'au moins une plaque de support ;
- de placement de l'au moins une strate de papier imprégnée sur au moins un côté de l'au moins une plaque de support, et
- de compression de l'au moins une strate de papier imprégnée et de l'au moins une plaque de support.

14. Procédé selon la revendication 13, **caractérisé en ce que** l'au moins une strate de papier imprégnée est contrecollée en utilisant au moins une colle, en particulier une colle de polyuréthane ou une colle thermoplastique.

15. Procédé selon l'une quelconque des revendications 13 ou 14, **caractérisé en ce que** l'au moins une plaque de support est compressée avec l'au moins une strate de papier imprégnée, au moins un overlay prévu sur la strate de papier imprégnée et au moins une contretraction prévue sur le côté faisant face de la plaque de support dans une presse à cycle court.
